# EUROPÄISCHE PATENTSCHRIFT

(11) **EP 1 351 480 B1**
(45) Veröffentlichungstag und Bekanntmachung des Hinweises auf die Patenterteilung: **29.10.2008**
(21) Anmeldenummer: 02405270.6
(22) Anmeldetag: 05.04.2002
(51) Int. Cl.: H04M 11/00

(54) **Verfahren zur Fernsteuerung eines Systems**
Methods for remote controlling of a system
Procédés de commande à distance d'un système

(43) Veröffentlichungstag der Anmeldung: 08.10.2003
(73) Patentinhaber: ABB Research Ltd., 8050 Zürich (CH)
(72) Erfinder: Straub, Florian, 5404 Baden-Dättwil (CH); von Hoff, Thomas, 8049 Zürich (CH); Crevatin, Mario, 8409 Winterthur (CH); Züger, Hans Peter, 5212 Hausen (CH)
(74) Vertreter: ABB Patent Attorneys

(56) Entgegenhaltungen:
- EP-A- 0 930 792
- WO-A-01/48722
- WO-A-01/72012
- US-B1- 6 201 996

## Beschreibung

### Technisches Gebiet

Die Erfindung bezieht sich auf das Gebiet der Steuerung und/oder Regelung von fernab gelegenen Systemen. Sie betrifft ein Verfahren zur Fernsteuerung und/oder -regelung eines Systems, insbesondere einer Industrieanlage, gemäss dem Oberbegriff des unabhängigen Patentanspruches.

### Stand der Technik

Möglichkeiten einer Fernüberwachung, -steuerung und/oder -regelung sind ein zunehmend wichtiger Faktor bei der Konzeption aller Arten von Systemen, insbesondere bei Industrieanlagen und Versorgungsanlagen beispielsweise in den Bereichen Elektrizität, Wasser und Wärme. Solche Möglichkeiten erlauben Effizienz- und Flexibilitätssteigerungen bei einem Betrieb und Unterhalt der Systeme, insbesondere im Hinblick auf Kundendienst- und Serviceleistungen, aber auch bei einem Normalbetrieb komplexer Systeme, falls ein häufiges Eingreifen von Bedienpersonal für einen störungsfreien Betrieb der Systeme erforderlich ist. Ein Aspekt der Fernüberwachung und -steuerung betrifft dabei eine Übermittlung einer das System betreffenden Information, beispielsweise in Form einer Warnung oder eines Alarms, und eine darauffolgende Rückübermittlung einer Befehlsinformation als Reaktion des Bedienpersonals.

EP 617350 offenbart Verfahren zur Fernsteuerung von Heizungs- oder Klimaanlagen sowie zur Selbstdiagnose mit Fernübertragung von Diagnoseergebnissen. Bei der Selbstdiagnose werden diagnoserelevante Daten der Heizungs- oder Klimaanlage durch eine Kommunikationseinrichtung erfasst, bearbeitet, kodiert und nach einer Herstellung einer Datenverbindung als Diagnoseinformationen zu einer externen Empfangseinrichtung übermittelt, wo sie empfangen, decodiert und schliesslich bearbeitet, angezeigt, ausgedruckt und/oder gespeichert werden. Bei der Fernsteuerung wird zunächst eine Datenverbindung von einer externen Befehlseinrichtung zu der Kommunikationseinrichtung aufgebaut und anschliessend eine Befehlsinformation in der Befehlseinrichtung kodiert, zur Kommunikationseinrichtung übermittelt, dort empfangen und dekodiert und schliesslich in der Kommunikationseinrichtung und/oder einer Steuer- und/oder Regeleinrichtung der Heizungs- oder Klimaanlage bearbeitet und/oder ausgeführt. Eine Übermittlung von Diagnose- und/oder Befehlsinformationen kann dabei über eine direkte Leitung stattfinden, es ist jedoch auch möglich, bestehende herkömmliche Informationsübertragungssysteme, z.B. Telekommunikationssysteme der Post wie Telefon, Fax, Cityruf u.ä. für die Übermittlung zu benutzen.

Eine Problematik bei fernsteuer- und/oder -regelbaren Systemen ist die Gefahr eines Eingriffs in das System durch Unbefugte. Falls die Kommunikationseinrichtung eine Verbindung zu einem öffentlichen Netz, beispielsweise einem Telekommunikationssystem der Post, aufweist, kann eine Verbindung zur Kommunikationseinrichtung durch Unbefugte ohne grössere Schwierigkeiten erstellt werden. Ist ein Protokoll für eine Kodierung/Dekodierung der Befehlsinformation bekannt, können Unbefugte sehr leicht Befehlsinformationen an die Kommunikationeinrichtung übermitteln. Werden diese von der Steuer- und/oder Regeleinrichtung entsprechend ausgeführt, kann es zu Ausfällen oder gar zu Schäden am System kommen, je nach System unter Umständen auch zu einer Gefährdung oder Schädigung der Umgebung und der Umwelt. In EP 617350 wird deswegen vorgeschlagen, in der Kommunikationseinrichtung vor einer eigentlichen Eingabe von Befehlsinformationen eine Benutzerauthentifizierung durchzuführen. Dazu muss ein Passwort oder eine Kennnummer eingegeben werden, welche die Berechtigung des Zugriffs auf die Kommunikationseinrichtung und damit das System beinhalten.

Während durch eine Benutzerauthentifizierung die Gefahr eines Zugriffs durch Unbefugte weitgehend gebannt werden kann, verbleibt dennoch ein gewisses Restrisiko. Dies ist insbesondere dann der Fall, wenn das Passwort oder die Kennnummer Unbefugten bekannt ist oder wird.

Eine besondere Gefahr stellen darüber hinaus sogenannte Hacker-Attacken dar. Dies sind Angriffe von Unbefugten, die darauf abzielen, durch wiederholte Versuche Passwort und/oder Kennnummer zu erraten. Vor allem solche Systeme, deren Kommunikationseinrichtungen Verbindungen zu Computernetzwerken aufweisen, sind hier besonders gefährdet, da die Hacker-Attacke mit Hilfe von Computerprogrammen und/oder -skripten automatisiert werden kann, so dass binnen kurzer Zeit eine sehr grosse Anzahl von Versuchen zum Erraten von Passwort und/oder Kennnummer durchgeführt werden kann.

Die Erfindung nimmt Bezug auf ein Verfahren zur Fernsteuerung und/oder -regelung von Geräten gemäss WO 01/72012. Bei dem offenbarten Verfahren wird von dem System über eine Kommunikationseinrichtung eine Mitteilung mit einem Validierungscode an einen Empfänger versendet. Vom Empfänger kann der Validierungscode dazu verwendet werden, um eine Nachricht an das System mit einem Kontrollcode zu versehen. Im System kann aus der Nachricht der Kontrollcode extrahiert und anhand von Validierungscode und Kontrollcode die Authentizität der Nachricht überprüft werden. Da Validierungscode und Kontrollcode zur Authentifizierung von Nachrichten dienen und unabhängig von Adressen der empfangenden Geräte sind, können bei Bedarf für unterschiedliche Geräte der gleiche Validierungscode und Kontrollcode verwendet werden.

In der WO 01/48722 wird ein fernsteuerbares Telemetrie-Modul offenbart, dass als Melder und Steuergerät ausgelegt ist. Wird vom Gerät eine Nachricht empfangen, sollen darin enthaltene Steuerbefehle nur dann ausgeführt werden, wenn die Nachricht von einer autorisierten Person abgesandt wurde. Hierfür wird überprüft, ob mindestens ein Teil der Rufnummer des Absenders mit einer gespeicherten Autorisierungs-Rufnummer übereinstimmt. Dies setzt voraus, dass das Kommunikationsnetz die Übertragung der Absender-Rufnummer unterstützt. Die Absenderidentifizierung findet unabhängig von der zu übermittelnden Nachricht statt und kann auch nicht zusammen mit dieser oder unabhängig von dieser verschlüsselt werden. Diese Art der Absendererkennung und Autorisierung bietet daher nur ein geringes Mass an Sicherheit.

In dem U. S. Pat. No. 6'201'996 B1 werden ein Verfahren und eine Vorrichtung zur Fernsteuerung einer Industrieanlage über Internet offenbart. Für die Benutzersicherheit werden ein Passwort-geschützter Zugang zur Webpage der Kommunikationseinrichtung, eine Verschlüsselung von über das Netzwerk zu übermittelnden Daten und eine geeignete Benutzerauthentifizierung offenbart, mit welcher der Benutzer Zugangsrecht zu einer reglementierten Webpage erhält, über die er die Anlage fernsteuern kann. Die Absenderidentifizierung ist kein integraler Bestandteil der zu übermittelnden Nachricht an die Webpage. Vielmehr wird die Benutzerauthentifizierung wiederum vor einem Zugriff auf die zu schützenden Daten oder Kontrollmechanismen und unabhängig von den zuschützenden Daten oder Befehlsinformationen durchgeführt.

In dem EP 0 930 792 wird ein System und ein Verfahren zur drahtlosen Übermittlung von Zustandsdaten an ein Geräteinterface offenbart. Zur Verhinderung von Missbrauch können Identifikationsdaten des Absenders mit der Nachricht gesendet werden. Für diesen Zweck wird beispielsweise die Telefonnummer des Absenders der Nachricht übermittelt.

### Beschreibung der Erfindung

Es ist deswegen Aufgabe der Erfindung, ein Verfahren zur Fernsteuerung und -regelung von Systemen anzugeben, welches die Gefahr einer Manipulation durch Unbefugte wirkungsvoll minimiert und insbesondere vor Hacker-Attacken schützt.

Es ist weiterhin Aufgabe der Erfindung, ein sicheres Verfahren zur Fernsteuerung und/oder -regelung eines Systems anzugeben, welches ohne die Notwendigkeit einer vor einer eigentlichen Übermittlung einer Befehlsinformation stattfindenden Benutzerauthentifizierung auskommt, und somit einfach und effizient ist.

Diese Aufgaben werden durch ein Verfahren nach Anspruch 1 und Anspruch 4 gelöst. Eine Mitteilung, welche eine das System betreffende Information und einen Validierungscode umfasst, wird dabei von einer dem System zugeordneten Kommunikationseinrichtung versendet, vorzugsweise an eine im voraus bestimmte Empfangseinrichtung. Sobald die Kommunikationseinrichtung zu einem Zeitpunkt nach der Versendung der Mitteilung eine Nachricht empfängt, wird aus dieser Nachricht nach einer vorgegebenen Regel ein Kontrollcode extrahiert. Anhand von Validierungscode und Kontrollcode wird unter Berücksichtigung der vorgegebenen Regel eine Herkunft der Nachricht überprüft, d.h. es wird überprüft, ob die Nachricht von einem Empfänger der Mitteilung stammt. Somit ist es möglich, anhand von Validierungscode und Kontrollcode zu verifizieren, ob die empfangene Nachricht eine Antwort auf die versendete Mitteilung darstellt.

Dabei weist der Validierungscode eine zeitliche begrenzte Gültigkeit auf und dem Validierungscode wird eine Gültigkeitsinformation beigefügt, durch welche die zeitliche Begrenzung der Gültigkeit des Validierungscodes definiert wird.

In einer ersten Ausführung wird die Gültigkeitsinformation dem Validierungscode direkt beigefügt, wird der Validierungscode in verschlüsselter Form übertragen, und nach einer Entschlüsselung von Nachricht oder Kontrollcode in der Kommunikationseinrichtung liegt die Gültigkeitsinformation wieder im Klartext vor.

In einer zweiten Ausführung wird bei einem Versenden der Mitteilung eine Kopie des Validierungscodes gespeichert, um für den Vergleich beim späteren Empfang einer Nachricht zur Verfügung zu stehen, und eine Gültigkeitsinformation, durch welche die zeitliche Begrenzung der Gültigkeit des Validierungscodes definiert wird, wird zusammen mit dem Validierungscode gespeichert.

Nur in solchen Fällen, in denen erfolgreich überprüft wurde, dass die Nachricht von einem Empfänger der Mitteilung stammt, wird aus der empfangenen Nachricht zusätzlich zum Kontrollcode nach der vorgegebenen Regel eine Befehlsinformation sowohl extrahiert als auch bearbeitet und/oder vom System ausgeführt.

Falls hingegen anhand von Valdierungscode und Kontrollcode nicht verfiziert werden konnte, dass die empfangene Nachricht eine Antwort auf die versendete Mitteilung darstellt, wird entweder die Befehlsinformation gar nicht erst aus der Nachricht extrahiert, oder die extrahierte Befehlsinformation wird ignoriert.

Diese und weitere Aufgaben, Vorteile und Merkmale der Erfindung werden aus der nachfolgenden, detaillierten Beschreibung eines bevorzugten Ausführungsbeispiels der Erfindung in Verbindung mit den Zeichnungen ersichtlich.

### Kurze Erläuterung der Zeichnung

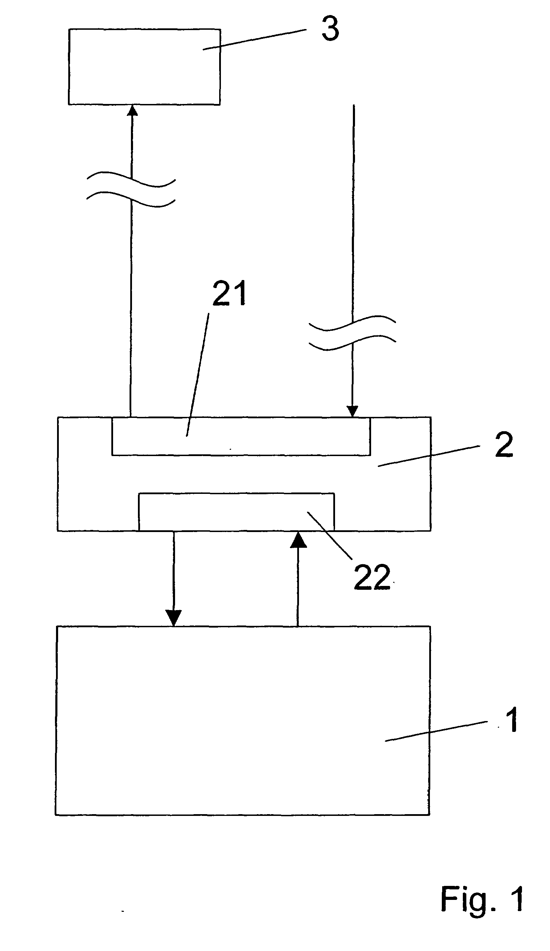

Fig. 1 zeigt schematisch ein Blockschaltbild eines mit dem erfindungsgemässen Verfahren fernsteuer- und/oder -regelbaren Systems.

Die in der Zeichnung verwendeten Bezugszeichen und deren Bedeutung sind in der Bezugszeichenliste zusammengefasst.

### Wege zur Ausführung der Erfindung

Fig. 1 zeigt schematisch ein Blockschaltbild eines Systems 1, welches über eine Kommunikationseinrichtung 2, die eine Systemschnittstelle 22 und eine Netzschnittstelle 21 aufweist, und eine Empfangseinrichtung 3 nach dem erfindungsgemässen Verfahren fernsteuer- und/oder -regelbar ist. Die Netzschnittstelle 21 verfügt über mindestens je ein Mittel zum Senden bzw. Empfangen von Mitteilungen bzw. Nachrichten.

Das System betreffende Daten werden in der Kommunikationseinrichtung 2, einer angeschlossenen Datenverarbeitungsanlage und/oder einer Untereinheit des Systems 1 gesammelt und gegebenenfalls aufbereitet. Die Daten können das System 1 direkt oder indirekt betreffen. Es können einerseits Betriebsparameter wie z.B. Temperaturen, Drücke, Durchflussmengen von Substanzen, Konfigurationsparameter wie Schalter- oder Ventilstellungen, andererseits auch Umgebungsparameter wie beispielsweise Umgebungstemperaturen oder ähnliches sein. Es kann sich, wie in den vorgenannten Beispielen, um Einzeldaten, die durch einen einzelnen Zahlenwert ausgedrückt werden können, vorteilhaft aber auch um komplexe, von einer Untereinheit des Systems vorverarbeitete Datensätze handeln. Die Daten werden schliesslich zu einer Information zusammengefasst. Dabei kann die Information aus lediglich einem einzelnen Datum bestehen, sie kann aus einer Vielzahl von Daten zusammengesetzt sein oder auch das Ergebnis einer Analyse von Daten sein, die in der Kommunikationseinrichtung 2, der angeschlossenen Datenverarbeitungsanlage oder dem System 1 selbst durchgeführt wurde.

Eine Mitteilung, welche die Information enthält, wird bei Erfüllung gewisser Bedingungen von der Kommunikationseinrichtung 2 über die Netzschnittstelle 21 an eine Empfangseinrichtung 3 übermittelt. Bedingung für eine Übermittlung einer Mitteilung ist vorzugsweise ein bei einer Auswertung der Daten diagnostizierter Fehler im System 1. Es ist jedoch auch denkbar, dass eine Mitteilung unabhängig von einem Zustand des Systems 1 übermittelt wird, beispielsweise wenn ein das System 1 indirekt betreffender Parameter wie die Umgebungstemperatur einen gewissen Grenzwert über- oder unterschreitet. In den genannten Situationen stellt die Übermittlung der Mitteilung gewissermassen einen Alarm dar. Vorteilhaft kann die Mitteilung aber auch zu einer fixen Uhrzeit, an einem festen Tag oder zu vorherbestimmten Terminen übermittelt werden.

Der Mitteilung wird von der Kommunikationseinrichtung 2 ein Validierungscode beigefügt. Zu diesem Zweck werden Information und Validierungscode gemäss einer ersten Kombinationsregel zusammengesetzt. Vorteilhaft erfolgt dies durch ein Aneinanderhängen von Information und Validierungscode. Bestehen Information und Validierungscode aus Zeichenfolgen, werden beim Aneinanderhängen vorteilhaft vorgegebene Steuer- oder Sonderzeichen als Separator dazwischengesetzt.

Eine Gültigkeit des Validierungscodes ist vorzugsweise einmalig und unterliegt einer zeitlichen Begrenzung. Der Validierungscode wird dabei auf geeignete Weise erzeugt, beispielsweise durch einen Zufallszahlengenerator, so dass er für Unbefugte nicht vorhersagbar ist. Die zeitliche Begrenzung und einmalige Gültigkeit erschweren eine Manipulation des Systems 1 durch Unbefugte in Fällen, in denen der Validierungscode bekannt wird.

Das erfindungsgemässe Verfahren wird fortgesetzt, sobald von der Kommunikationseinrichtung 2 über die Netzschnittstelle 21 eine Nachricht empfangen wird. Die Kommunikationseinrichtung 2 extrahiert dann nach einer ersten Extraktionsregel einen Kontrollcode aus der Nachricht. Eine Herkunft der empfangenen Nachricht wird sodann anhand des Validierungscodes und des Kontrollcodes überprüft. Vorteilhaft wird zu diesem Zweck ein Kontrollcode verwendet, der mit dem Validierungscode identisch ist. Die Überprüfung der Herkunft erfolgt dann durch einen Vergleich von Validierungscodes und Kontrollcode. Dazu muss bei einem Versenden der Mitteilung eine Kopie des Validierungscodes gespeichert werden, um für den Vergleich beim späteren Empfang einer Nachricht zur Verfügung zu stehen. Eine zeitliche Begrenzung der Gültigkeit des Validierungscodes wird in diesem Fall vorteilhaft dadurch ermöglicht, dass eine Gültigkeitsinformation zusammen mit dem Validierungscode gespeichert wird. Es ist jedoch auch eine Überprüfung ohne explizite Kenntnis des Validierungscodes vorteilhaft einsetzbar. So können unter anderem bestimmte Eigenschaften des Validierungscodes zur Überprüfung herangezogen werden, beispielsweise dessen Quersumme. Der Kontrollcode muss dann nur auf diese Eigenschaften, im Beispiel die Quersumme, überprüft werden.

Neben dem Kontrollcode wird aus der Nachricht nach der ersten Extraktionsregel ausserdem eine Befehlsinformation extrahiert. Nur bei erfolgreicher Überprüfung anhand von Validierungs- und Kontrollcode wird die Befehlsinformation von der Kommunikationseinrichtung 2 zum Zwecke einer Ausführung über die Systemschnittstelle 22 an das System 1 weitergegeben, gegebenenfalls nach einer vorangehenden Bearbeitung. Dabei ist vorzugsweise zwischen Kommunikationseinrichtung 2 und System 1 eine Steuereinrichtung vorgesehen, an welche die Befehlsinformation gegeben wird und von wo sie an das System 1 weitergegeben wird. War die Überprüfung nicht erfolgreich, bleibt die Befehlsinformation unberücksichtigt.

Die erste Extraktionsregel ist dabei vorzugsweise so beschaffen, dass Kontrollcode und Befehlsinformation durch ein Herausschneiden von Teilbereichen der Nachricht extrahiert werden.

Wie sich aus den bisherigen Erläuterungen ergibt, stellt eine Anwendung des erfindungsgemässen Verfahrens sicher, dass nur ein Empfänger der Mitteilung und damit des Validierungscodes in der Lage ist, Befehle zur Fernsteuerung- und/oder -regelung des Systems 1 zu erteilen. Um dies zu tun, muss der Empfänger gemäss einer zweiten Extraktionsregel, welche eine Umkehrung der ersten Kombinationsregel darstellt, zunächst den Validierungscode aus der Mitteilung extrahieren. Aus den Befehlen, die er zu erteilen beabsichtigt, kann er zusammen mit dem Validierungscöde unter Kenntnis der ersten Extraktionsregel eine Nachricht generieren, aus der die Kommunikationseinrichtung 2, nachdem sie diese Nachricht empfangen hat, einen Kontrollcode extrahiert, der zur erfolgreichen Überprüfung der Nachricht führt und damit zur Extraktion und Umsetzung der Befehlsinformation. Dazu muss er eine zweite Kombinationsregel benutzen, die dies gewährleistet.

In einer weiteren bevorzugten Ausgestaltung des erfindungsgemässen Verfahrens wird aus der Nachricht nach einer dritten Extraktionsregel eine Absenderinformation extrahiert. In der Kommunikationseinrichtung 2 wird die Absenderinformation überprüft und nur im Falle einer erfolgreichen Absenderidentifizierung, d.h. einer Übereinstimmung der Absenderinformation mit gespeicherten Absenderdaten autorisierter Benutzer, wird die Befehlsinformation von der Kommunikationseinrichtung 2 an das System 1 weitergegeben und/oder bearbeitet. Vorzugsweise beinhaltet die Absenderinformation dabei ein geheimes Passwort oder eine geheime Kennnummer. In diesem Falle handelt es sich um eine sogenannte starke Benutzerauthentifizierung, d.h. der Absender wird dadurch als autorisierter Benutzer authentifiziert, dass er einerseits etwas weiss, nämlich Passwort oder Kennnummer, andererseits etwas besitzt - im vorliegenden Fall die Empfangseinrichtung 3, an welche die Mitteilung übermittelt wurde respektive die Mitteilung, die er mit der Empfangseinrichtung 3 empfangen hat. Der Empfänger der Mitteilung muss dabei einer Nachricht, welche er generiert, die Absenderinformation gemäss einer dritten Kombinationsregel beifügen.

In einer bevorzugten Ausgestaltung des erfindungsgemässen Verfahrens werden Validierungscode, Kontrollcode und/oder Absenderinformation verschlüsselt übertragen. Dazu werden vorzugsweise Validierungscode und/oder Absenderinformation selbst verschlüsselt, bevor sie gemäss erster bzw. dritter Kombinationsregel der Mitteilung bzw. Nachricht beigefügt werden. Vorteilhaft kann aber auch die gesamte Mitteilung und/oder Nachricht verschlüsselt werden. Empfängt die Kommunikationseinrichtung 2 eine verschlüsselte Nachricht, muss diese zunächst entschlüsselt werden. Liegen Kontrollcode oder Absenderinformation nach der Extraktion aus der Nachricht in verschlüsselter Form vor, sind diese zu entschlüsseln. Wenn die Nachricht eine Absenderinformation enthält, wird durch eine verschlüsselte Übertragung die Gefahr einer Manipulation durch Unbefugte weiter verringert, weil aus abgehörten oder abgefangenen Nachrichten nicht ohne weiteres die Absenderinformation gewonnen werden kann. Auch wenn die Gültigkeit des Validierungscodes einer zeitlichen Begrenzung unterliegen soll, ist eine verschlüsselte Übertragung vorteilhaft. In diesem Fall kann eine Gültigkeitsinformation dem Validierungscode direkt, beispielsweise durch Anhängen, beigefügt werden. Eine Manipulation der Gültigkeitsinformation durch den Empfänger ist ausgeschlossen. Nach einer Entschlüsselung von Nachricht oder Kontrollcode in der Kommunikationseinrichtung 2 liegt die Gültigkeitsinformation wieder im Klartext vor. Eine Speicherung der Gültigkeitsinformation ist somit nicht notwendig.

In einer bevorzugten Ausgestaltung des erfindungsgemässen Verfahrens wird die Mitteilung bzw. die Nachricht mittels short message service (SMS) über ein GSM- oder ISDN-Netz verschickt bzw. empfangen.

In einer weiteren bevorzugten Ausgestaltung des erfindungsgemässen Verfahrens wird die Nachricht über ein öffentliches Computernetz, vorzugsweise das Internet, empfangen.

Die bei der Durchführung des erfindungsgemässen Verfahrens gemäss vorstehender Beschreibung eingesetzten Mittel wie Kommunikationseinrichtung 2, Netzschnittstelle 21, Systemschnittstelle 22, Empfangseinrichtung 3 und Steuereinrichtung sind als funktionale Elemente zu verstehen und müssen nicht notwendigerweise als eigenständige physikalische Einheiten ausgebildet sein. So kann mit dem Verfahren vorteilhaft auch ein System 1 ferngesteuert und/oder -geregelt werden, bei dem die Kommunikationseinrichtung und/oder die Steuereinrichtung in das System 1 integriert ist. Vorteilhaft kann die Kommunikationseinrichtung 2 in eine elektronische Rechenanlage integriert sein, in welcher vorteilhaft auch die Steuereinrichtung implementiert ist. Vorteilhaft dient die elektronische Rechenanlage auch als Datenverarbeitungsanlage bei einer Erfassung und der Analyse das System betreffender Daten.

Das erfindungsgemässe Verfahren lässt sich vorteilhaft auch bei der Fernsteuerung und/oder -regelung von computerbasierten Systemen wie beispielsweise Datenverarbeitungssystemen, Finanztransaktionssystemen oder Handelssystemen einsetzen.

Der Empfänger der Mitteilung wird im Allgemeinen eine Person sein. Die Mitteilung kann in diesem Fall vorteilhaft auch in akustischer Form vorliegen und beispielsweise aus einer zeitlichen Aufeinanderfolge aus Information und Validierungscode bestehen. Es ist aber auch denkbar, dass der Empfänger ein elektronisches Gerät ist, das eine Nachricht mit einer geeigneten Befehlsinformation automatisch als Antwort auf die Mitteilung erstellt und an die Kommunikationseinrichtung 2 zurückübermittelt.

### Bezugszeichenliste

- 1: System
- 2: Kommunikationseinrichtung
- 21: Netzschnittstelle
- 22: Systemschnittstelle
- 3: Empfangseinrichtung

## Patentansprüche

1. Verfahren zur Fernsteuerung und/oder -regelung mindestens eines Systems (1), insbesondere einer Industrieanlage,
- unter Verwendung einer Kommunikationseinrichtung (2), welche dem System (1) zugeordnet ist,
- wobei von der Kommunikationseinrichtung (2) eine Mitteilung versendet wird,
- die Mitteilung eine Information betreffend das System (1) und einen Validierungscode umfasst, wobei die Information und der Validierungscode gemäß einer ersten Kombinationsregel zusammengesetzt werden, und
- aus einer Nachricht, welche die Kommunikationseinrichtung (2) nach der Versendung der Mitteilung empfängt,
• gemäss einer ersten Extraktionsregel ein Kontrollcode extrahiert wird und
• anhand von Validierungscode und Kontrollcode überprüft wird, ob die Nachricht von einem Empfänger der Mitteilung stammt und
• nur im Fall einer erfolgreichen Überprüfung eine Befehlsinformation gemäss der ersten Extraktionsregel aus der Nachricht extrahiert und vom System (1) umgesetzt wird,
- wobei der Validierungscode eine zeitlich begrenzte Gültigkeit aufweist,
**dadurch gekennzeichnet, dass**
- dem Validierungscode eine Gültigkeitsinformation beigefügt wird, durch welche die zeitliche Begrenzung der Gültigkeit des Validierungscodes definiert wird,
- die Gültigkeitsinformation dem Validierungscode direkt beigefügt wird,
- der Validierungscode in verschlüsselter Form übertragen wird, und
- nach einer Entschlüsselung von Nachricht oder Kontrollcode in der Kommunikationseinrichtung (2) die Gültigkeitsinformation wieder im Klartext vorliegt.

2. Verfahren nach Anspruch 1, **dadurch gekennzeichnet, dass**
- dem Validierungscode die Gültigkeitsinformation angehängt oder vorangestellt wird.

3. Verfahren nach einem der vorangehenden Ansprüche, **dadurch gekennzeichnet, dass**
- eine Speicherung der Gültigkeitsinformation in der Kommunikationseinrichtung (2) nicht erfolgt.

4. Verfahren zur Fernsteuerung und/oder -regelung mindestens eines Systems (1), insbesondere einer Industrieanlage,
- unter Verwendung einer Kommunikationseinrichtung (2), welche dem System (1) zugeordnet ist,
- wobei von der Kommunikationseinrichtung (2) eine Mitteilung versendet wird,
- die Mitteilung eine Information betreffend das System (1) und einen Validierungscode umfasst, wobei die Information und der Validierungscode gemäß einer ersten Kombinationsregel zusammengesetzt werden, und
- aus einer Nachricht, welche die Kommunikationseinrichtung (2) nach der Versendung der Mitteilung empfängt,
• gemäss einer ersten Extraktionsregel ein Kontrollcode extrahiert wird und
• anhand von Validierungscode und Kontrollcode überprüft wird, ob die Nachricht von einem Empfänger der Mitteilung stammt und
• nur im Fall einer erfolgreichen Überprüfung eine Befehlsinformation gemäss der ersten Extraktionsregel aus der Nachricht extrahiert und vom System (1) umgesetzt wird,
- wobei der Validierungscode eine zeitlich begrenzte Gültigkeit aufweist,
**dadurch gekennzeichnet, dass**
- bei einem Versenden der Mitteilung eine Kopie des Validierungscodes gespeichert wird, um für den Vergleich beim späteren Empfang einer Nachricht zur Verfügung zu stehen, und
- eine Gültigkeitsinformation, durch welche die zeitliche Begrenzung der Gültigkeit des Validierungscodes definiert wird, zusammen mit dem Validierungscode gespeichert wird.

5. Verfahren nach einem der vorangehenden Ansprüche, **dadurch gekennzeichnet, dass**
- die Gültigkeit des Validierungscodes einmalig ist.

6. Verfahren nach einem der vorangehenden Ansprüche, **dadurch gekennzeichnet, dass**
- der Validierungscode durch einen Zufallszahlengenerator erzeugt wird.

7. Verfahren nach einem der vorangehenden Ansprüche, **dadurch gekennzeichnet, dass**
- der Validierungscode selbst verschlüsselt wird, bevor er gemäss der ersten Kombinationsregel der Mitteilung oder Nachricht beigefügt wird.

8. Verfahren nach einem der vorangehenden Ansprüche, **dadurch gekennzeichnet, dass**
- der Kontrollcode in verschlüsselter Form übertragen wird.

9. Verfahren nach einem der vorangehenden Ansprüche, **dadurch gekennzeichnet, dass**
- vom Empfänger der Mitteilung der Nachricht, die er generiert, eine Absenderinformation gemäss einer dritten Kombinationsregel beigefügt wird,
- aus der Nachricht gemäss einer dritten Extraktionsregel die Absenderinformation extrahiert wird,
- anhand von Absenderinformation und gespeicherten Absenderdaten der Absender identifiziert wird,
- nur im Fall einer erfolgreichen Überprüfung, ob die Nachricht von einem Empfänger der Mitteilung stammt, und einer erfolgreichen Absenderidentifizierung eine Befehlsinformation nach Extraktion von Kontrollcode und Absenderinformation aus der Nachricht vom System (1) umgesetzt wird und,
- falls die Überprüfung und/oder die Absenderidentifizierung nicht erfolgreich war oder waren, die Befehlsinformation unberücksichtigt bleibt.

10. Verfahren nach Anspruch 9, **dadurch gekennzeichnet, dass**
- die Absenderinformation ein geheimes Passwort oder eine geheime Kennnummer beinhaltet.

11. Verfahren nach einem der Ansprüche 9-10, **dadurch gekennzeichnet, dass**
- die Absenderinformation in verschlüsselter Form übertragen wird.

12. Verfahren nach einem der Ansprüche 9-11, **dadurch gekennzeichnet, dass**
- die Absenderinformation selbst verschlüsselt wird, bevor sie gemäss einer dritten Kombinationsregel der Nachricht beigefügt wird.

13. Verfahren nach einem der vorangehenden Ansprüche, **dadurch gekennzeichnet, dass**
- die gesamte Mitteilung und/oder Nachricht verschlüsselt werden.

14. Verfahren nach einem der vorangehenden Ansprüche, **dadurch gekennzeichnet, dass**
- die Mitteilung und/oder die Nachricht per short message service versendet und/oder empfangen wird.

15. Verfahren nach einem der vorangehenden Ansprüche, **dadurch gekennzeichnet, dass**
- die Nachricht via Internet empfangen wird.

16. Verfahren nach einem der vorangehenden Ansprüche, **dadurch gekennzeichnet, dass**
- die Übermittlung der Mitteilung einen Alarm darstellt, insbesondere dass
- die Übermittlung der Mitteilung durch einen diagnostizierten Fehler im System (1) bedingt ist, oder
- die Übermittlung der Mitteilung unabhängig von einem Zustand des Systems (1) dadurch bedingt ist, dass ein das System (1) indirekt betreffender Parameter, insbesondere eine Umgebungstemperatur, einen Grenzwert über- oder unterschreitet.

17. Verfahren nach einem der vorangehenden Ansprüche, **dadurch gekennzeichnet, dass**
- die Mitteilung zu einer fixen Uhrzeit, an einem festen Tag oder zu vorherbestimmten Terminen übermittelt wird.

## Claims

1. Method for remotely controlling and/or regulating at least one system (1), in particular an industrial system,
- using a communications device (2) which is assigned to the system (1),
- wherein a communication is dispatched by the communications device (2),
- the communication comprises information relating to the system (1) and a validation code, wherein the information and the validation code are combined according to a first combination rule, and
- from a message which the communications device (2) receives after the communication has been dispatched
• a check code is extracted according to a first extraction rule and
• by means of the validation code and the check code it is checked whether the message originates from a receiver of the communication, and
• instruction information according to the first extraction rule is extracted from the message and implemented by the system (1) only if the checking is successful,
- wherein the validation code has a limited period of validity, **characterized in that**
- validity information is added to the validation code, by means of which the chronological limitation of the validity of the validation code is defined
- the validity information is added directly to the validation code,
- the validation code is transmitted in encrypted form, and
- after decryption of the message or check code in the communications device (2), the validity information is available again in plain text.

2. Method according to Claim 1, **characterized in that**
- the validity information is appended to or prefixed to the validation code.

3. Method according to one of the preceding claims, **characterized in that**
- the validity information is not stored in the communications device (2).

4. Method for remotely controlling and/or regulating at least one system (1), in particular an industrial system,
- using a communications device (2) which is assigned to the system (1),
- wherein a communication is dispatched by the communications device (2),
- the communication comprises information relating to the system (1) and a validation code, wherein the information and the validation code are combined according to a first combination rule, and
- a message which the communications device (2) receives after the communication has been dispatched,
• a check code is extracted according to a first extraction rule and
• by means of the validation code and the check code it is checked whether the message originates from a receiver of the communication, and
• instruction information according to the first extraction rule is extracted from the message and implemented by the system (1) only if the checking is successful,
- wherein the validation code has a limited period of validity, **characterized in that**
- when a communication is dispatched, a copy of the validation code is stored so that it is available for the comparison when a message is received later, and
- a validity information item, by means of which the chronological limitation of the validity of the validation code is defined, is stored together with the validation code.

5. Method according to one of the preceding claims, **characterized in that**
- the validation code is valid once.

6. Method according to one of the preceding claims, **characterized in that**
- the validation code is generated by a random number generator.

7. Method according to one of the preceding claims, **characterized in that**
- the validation code itself is encrypted before it is added to the communication or message in accordance with a first combination rule.

8. Method according to one of the preceding claims, **characterized in that**
- the check code is transmitted in encrypted form.

9. Method according to one of the preceding claims, **characterized in that**
- the receiver of the communication adds, to the message which it generates, dispatcher information in accordance with a third combination rule,
- the dispatcher information is extracted from the message in accordance with a third extraction rule,
- the dispatcher is identified by means of dispatcher information and stored dispatcher data,
- instruction information is implemented, after the extraction of the check code and dispatcher information from the message by the system (1), only if the checking as to whether the message originates from a receiver of the communication is successful and if the identification of the dispatcher is successful, and
- if the checking and/or the identification of the dispatcher were/was not successful, the instruction information is ignored.

10. Method according to Claim 9, **characterized in that**
- the dispatcher information contains a secret password or a secret identification number.

11. Method according to either of Claims 9 and 10, **characterized in that**
- the dispatcher information is transmitted in encrypted form.

12. Method according to one of Claims 9 to 11, **characterized in that**
- the dispatcher information itself is encrypted before it is added to the message in accordance with a third combination rule.

13. Method according to one of the preceding claims, **characterized in that**
- the entire communication and/or message are encrypted.

14. Method according to one of the preceding claims, **characterized in that**
- the communication and/or the message are dispatched and/or received by means of short message service.

15. Method according to one of the preceding claims, **characterized in that**
- the message is received via the Internet.

16. Method according to one of the preceding claims, **characterized in that**
- the transmission of the communication constitutes an alarm, in particular **in that**
- the transmission of the communication is brought about by a diagnosed fault in the system (1), or
- the transmission of the communication is brought about independently of a state of the system (1) as a result of the fact that a parameter which indirectly relates to the system (1), in particular an ambient temperature, exceeds or drops below a limiting value.

17. Method according to one of the preceding claims, **characterized in that**
- the communication takes place at a fixed time, on a specific day or according to predetermined deadlines.

## Revendications

1. Procédé de commande et/ou de régulation à distance d'au moins un système (1), en particulier d'une installation industrielle,
- par recours à un dispositif de communication (2) qui est associé au système (1),
- le dispositif de communication (2) envoyant une missive,
- la missive comprenant une information concernant le système (1) et un code de validation, l'information et le code de validation étant assemblés selon une première règle de combinaison et
- à partir d'un message que le dispositif de communication (2) reçoit après avoir envoyé sa missive,
- un code de contrôle est extrait selon une première règle d'extraction et
- à l'aide du code de validation et du code de contrôle, on vérifie si le message provient d'un récepteur de la missive et
- uniquement si la vérification a un résultat positif, une information d'ordre est extraite du message selon la première règle d'extraction et est convertie par le système (1),
- le code de validation présentant une validité limitée dans le temps,
**caractérisé en ce que**
- au code de validation est ajoutée une information de validité qui définit la limite temporelle de la validité du code de validation,
- l'information de validité est jointe directement au code de validation,
- le code de validation est transmis sous forme cryptée et
- après décryptage du message ou du code de contrôle dans le dispositif de communication (2), l'information de validité se retrouve en texte clair.

2. Procédé selon la revendication 1, **caractérisé en ce que** l'information de validité suit ou précède le code de validation.

3. Procédé selon l'une des revendications précédentes, **caractérisé en ce que** l'information de validité n'est pas conservée en mémoire dans le dispositif de communication (2).

4. Procédé de commande et/ou de régulation à distance d'au moins un système (1), en particulier une installation industrielle,
- par recours à un dispositif de communication (2) qui est associé au système (1),
- le dispositif de communication (2) envoyant une missive,
- la missive comprenant une information concernant le système (1) et un code de validation, l'information et le code de validation étant assemblés selon une première règle de combinaison et
- à partir d'un message que le dispositif de communication (2) reçoit après avoir envoyé sa missive,
- un code de contrôle est extrait selon une première règle d'extraction et
- à l'aide du code de validation et du code de contrôle, on vérifie si le message provient d'un récepteur de la missive et
- uniquement si la vérification a un résultat positif, une information d'ordre est extraite du message selon la première règle d'extraction et est convertie par le système (1),
- le code de validation présentant une validité limitée dans le temps,
**caractérisé en ce que**
- lors de l'envoi de la missive, une copie du code de validation est conservée en mémoire pour être disponible pour la comparaison lors de la réception ultérieure d'un message et
- une information de validité qui définit la limite temporelle de validité du code de validation est conservée en mémoire avec le code de validation.

5. Procédé selon l'une des revendications précédentes, **caractérisé en ce que** la validité du code de validation est unique.

6. Procédé selon l'une des revendications précédentes, **caractérisé en ce que** le code de validation est créé par un générateur de nombres aléatoires.

7. Procédé selon l'une des revendications précédentes, **caractérisé en ce que** le code de validation est lui-même crypté avant d'être joint à la missive ou au message selon la première règle de combinaison.

8. Procédé selon l'une des revendications précédentes, **caractérisé en ce que** le code de contrôle est transmis sous forme cryptée.

9. Procédé selon l'une des revendications précédentes, **caractérisé en ce que** selon une troisième règle de combinaison, le récepteur de la missive joint au message qu'il crée une information concernant l'émetteur,
- l'information concernant l'émetteur est extraite du message selon une troisième règle d'extraction,
- l'émetteur est identifié à l'aide de l'information concernant l'émetteur et des données de l'émetteur conservées en mémoire,
- uniquement lorsque la vérification que le message provient d'un récepteur de la missive a un résultat positif et lorsque l'identification de l'émetteur a été couronnée de succès, une information d'ordre est convertie par le système (1) après que le code de contrôle et l'information sur l'émetteur ont été extraits du message et
- au cas où la vérification et/ou l'identification de l'émetteur n'ont pas été couronnées de succès, l'information d'ordre n'est pas prise en compte.

10. Procédé selon la revendication 9, **caractérisé en ce que** l'information sur l'émetteur contient un mot de passe secret ou un numéro d'identification secret.

11. Procédé selon les revendications 9 à 10, **caractérisé en ce que** l'information sur l'émetteur est transmise sous forme cryptée.

12. Procédé selon l'une des revendications 9 à 11, **caractérisé en ce qu'**avant d'être jointe au message selon une troisième règle de combinaison, l'information sur l'émetteur est elle-même cryptée.

13. Procédé selon l'une des revendications précédentes, **caractérisé en ce que** l'ensemble de la missive et/ou du message est crypté.

14. Procédé selon l'une des revendications précédentes, **caractérisé en ce que** la missive et/ou le message sont envoyés et/ou reçus par "short message service" (SMS).

15. Procédé selon l'une des revendications précédentes, **caractérisé en ce que** le message est envoyé par Internet.

16. Procédé selon l'une des revendications précédentes, **caractérisé en ce que**
- la transmission de la missive constitue une alarme, et en particulier
- **en ce que** la transmission de la missive est provoquée par une erreur diagnostiquée dans le système (1) ou
- la transmission de la missive est provoquée, indépendamment de l'état du système (1), par le fait qu'un paramètre qui concerne indirectement le système (1), en particulier une température ambiante ou une valeur limite, est dépassé ou n'est pas atteint.

17. Procédé selon l'une des revendications précédentes, **caractérisé en ce que** la missive est transmise à une heure fixe, un jour fixe ou à des délais préalablement définis.
